**Europäisches Patentamt**

**European Patent Office**

**Office européen des brevets**

(11) Numéro de publication: **0 156 737**

**A2**

(12) # DEMANDE DE BREVET EUROPEEN

(21) Numéro de dépôt: **85400634.3**

(22) Date de dépôt: **01.04.85**

(51) Int. Cl.⁴: **G 02 B 6/28**

(30) Priorité: **02.04.84 FR 8405154**

(43) Date de publication de la demande:
**02.10.85 Bulletin 85/40**

(84) Etats contractants désignés:
**AT BE CH DE FR GB IT LI LU NL SE**

(71) Demandeur: **TONNA ELECTRONIQUE**
**36, avenue Hoche -Z.I.S.-E.**
**F-51000 Reims(FR)**

(72) Inventeur: **Jarret, Bertrand**
**109, Avenue Jean Moulin**
**F-41100 Vendome(FR)**

(74) Mandataire: **Martin, Jean-Jacques et al,**
**Cabinet REGIMBEAU 26, Avenue Kléber**
**F-75116 Paris(FR)**

(54) **Coupleur à fibre optique perfectionné et procédé d'usinage de fibres optiques.**

(57) La présente invention concerne un coupleur à fibre optique qui comprend un support portant une fibre optique principale (10) à gradient d'indice présentant une surface frontale biseautée (12) oblique en regard de son axe longitudinal (11), un premier élément optique auxiliaire (20) disposé en regard de la surface frontale biseautée (12) de la fibre optique principale, dont l'axe optique (21) est incliné sur l'axe longitudinal de la fibre optique principale, et un second élément optique auxiliaire (30) généralement transversal à la fibre optique principal et dont l'axe optique (31) est incliné sur la normale (13) à l'axe longitudinal (11) de la fibre optique principale (10). La présente invention concerne également un procédé d'usinage de fibres optiques.

FIG.4

## COUPLEUR A FIBRE OPTIQUE PERFECTIONNE ET PROCEDE D'USINAGE DE FIBRES OPTIQUES.

La présente invention concerne les coupleurs optiques, et plus particulièrement les coupleurs à fibre optique.

La présente invention concerne également un procédé d'usinage de fibres optiques.

Les coupleurs à fibre optique ont pour but essentiel de diviser un faisceau optique incident en une pluralité de faisceaux optiques auxiliaires et de diriger ces faisceaux optiques auxiliaires, selon des chemins optiques différents, vers des éléments optiques auxiliaires respectifs.

De nombreux types de coupleurs à fibre optique ont déjà été proposés. Toutefois, les dispositifs jusqu'ici proposés ne donnent pas entière satisfaction.

Comme cela est décrit dans la demande de brevet Française publiée sous le n° 2 422 977, on a proposé des coupleurs à fibre optique comprenant trois lentilles, un miroir semi-réfléchissant et trois fibres optiques.

De tels dispositifs sont cependant difficilement industrialisables. D'une part, ces dispositifs imposent un nombre de réglages élevé , de l'ordre de douze pour les réglages en position. D'autre part, ces dispositifs sont relativement coûteux.

Différents dispositifs visant à éliminer les inconvénients du coupleur du type décrit dans la demande de brevet précitée n° 2 422 977 ont été proposés.

Certaines de ces propositions sont illustrées dans les demandes de brevet Françaises publiées sous les n° 2 525 777, 2 475 240, 2 344 855, 2 198 160, 2 507 787, ou encore dans la demande de brevet Britannique publiée sous le n° 2 032 132 ou le brevet Américain 4 176 908.

Tous ces dispositifs présentent des inconvénients dans la pratique.

L'inconvénient majeur de ces dispositifs est lié à leur coût élevé, prohibitif pour un grand nombre d'applications.

Un autre inconvénient non négligeable est dû à la fiabilité aléatoire des dispositifs antérieurement proposés.

La présente invention vient maintenant améliorer la situation en proposant un coupleur à fibre optique comprenant :

- un support qui porte :

- une fibre optique principale à gradient d'indice comportant une surface frontale biseautée, oblique en regard de son axe longitudinal,

- un premier élément optique auxiliaire disposé en regard de la surface frontale biseautée de la fibre optique principale, sensiblement dans l'alignement de cette dernière, dont l'axe optique est cependant légèrement incliné sur l'axe longitudinal de la fibre optique principale, et

- un second élément optique auxiliaire adjacent à l'extrémité de la fibre optique principale comportant la surface frontale biseautée, dont l'axe optique est sensiblement transversal à l'axe longitudinal de la fibre optique principale en étant incliné sur la normale à cet axe longitudinal.

On remarquera que le coupleur conforme à la présente invention comprend un nombre limité de pièces.

De ce fait, ledit coupleur conforme à la présente invention s'avère à la fois économique, robuste, fiable et d'un rendement élevé.

La présente invention permet ainsi de généraliser l'emploi des fibres optiques.

Selon une première variante de réalisation, l'un au moins des éléments optiques auxiliaires comprend une fibre optique, chacune de celles-ci présentant de préférence une surface frontale transversale à son axe longitudinal.

Selon une seconde variante de réalisation, l'un au moins des éléments optiques auxiliaires comprend un émetteur ou un récepteur lumineux.

Selon une caractéristique préférentielle de la présente invention, la surface frontale biseautée de la fibre optique principale est inclinée sur son axe longitudinal d'un angle compris entre 30° et 70° en étant compris de préférence entre 40° et 60°.

Selon une première caractéristique importante de la présente invention, l'inclinaison de l'axe optique du premier élément optique auxiliaire par rapport à l'axe longitudinal de la fibre optique principale est définie par la relation :

$$\varphi_1 = \frac{1}{2} \, \text{arc sin} \left\{ n.\sin\left[ \frac{\pi}{2} - \alpha - \left( \text{arc sin} \, \frac{N.A.}{n} \right) \right] \right\} \qquad (1)$$

dans laquelle :

n   représente l'indice au centre du coeur de la fibre optique principale,

N.A. représente l'ouverture numérique de celle-ci, et

α   représente l'inclinaison de la surface frontale biseautée de la fibre optique principale sur son axe longitudinal.

Selon une seconde caractéristique importante de la présente invention, l'inclinaison de l'axe optique du second élément optique auxiliaire par rapport à la normale à l'axe longitudinal de la fibre optique principale est définie par la relation :

$$\varphi_2 = \frac{\arg \sin \left\{ n.\sin \left[ \frac{\pi}{2} - 2\alpha + \left( \arg \sin \frac{N.A.}{n} \right) \right] \right\}}{2}$$

$$- \frac{\arg \sin \left\{ n.\sin \left[ \alpha - \arg \sin \left( \frac{\sin 2\alpha}{n} \right) \right] \right\}}{2} \quad (2)$$

dans laquelle

n       représente l'indice au centre du coeur de la fibre
        optique principale,

N.A.    représente l'ouverture numérique de celle-ci, et

α       représente l'inclinaison de la surface frontale
        biseautée de la fibre optique principale sur son
        axe longitudinal.

Avantageusement, le support comprend un socle muni
de rainures aptes à recevoir la fibre optique principale
et les éléments optiques auxiliaires.

Les rainures ménagées dans le socle présentent
de préférence une section droite en "V".

De plus, selon l'invention, la fibre optique principale et les éléments optiques auxiliaires sont soit collés sur le socle, soit immobilisés dans les rainures du
socle à l'aide de pinces élastiques.

D'autres caractéristiques et avantages de la présente invention en particulier celles relatives au procédé
d'usinage apparaîtront à la lecture de la description détaillée qui va suivre et en regard des dessins
annexés donnés à titre d'exemples non limitatifs sur
lesquels :

- la figure 1 représente schématiquement une fibre
optique principale et les éléments optiques auxiliaires
intégrés à un coupleur à fibre optique conforme à la
présente invention,

- la figure 2 illustre le positionnement relatif des axes optiques dans un coupleur à fibre optique conforme à la présente invention,

- la figure 3 représente une vue schématique en perspective d'un support utilisé dans un coupleur à fibre optique conforme à la présente invention,

- la figure 4 représente une vue de dessus d'un coupleur à fibre optique conforme à la présente invention,

- la figure 5 représente une vue schématique latérale d'un coupleur à fibre optique illustrant une variante de réalisation des moyens de fixation des éléments optiques sur le support,

- la figure 6 représente une vue de dessus d'une variante de réalisation d'un coupleur à fibre optique conforme à la présente invention.

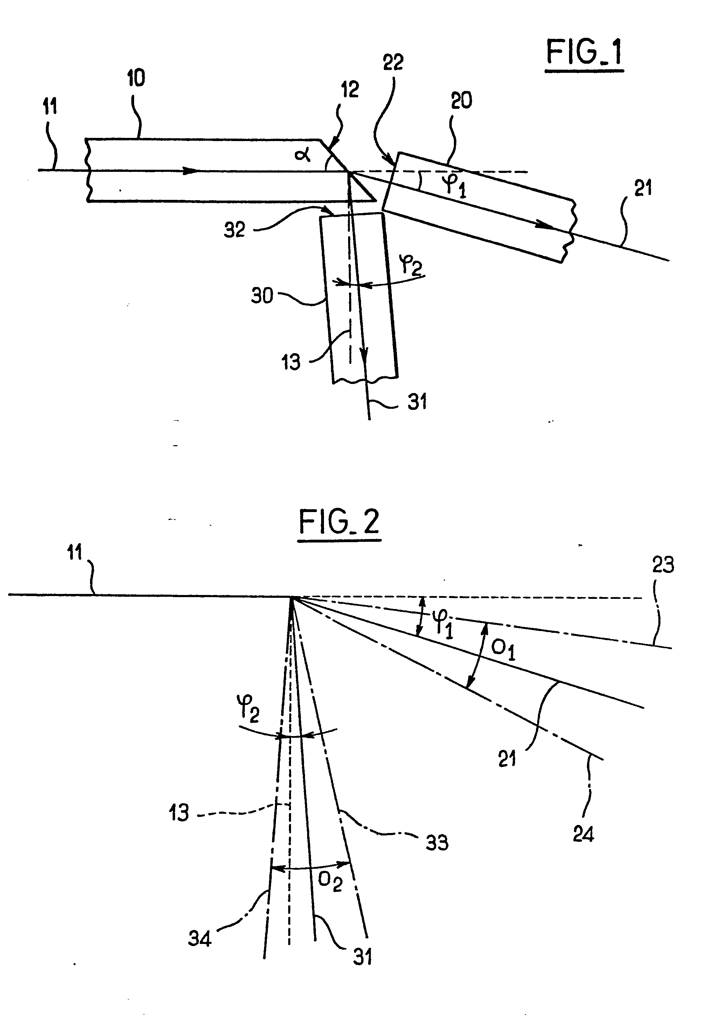

On a représenté sur la figure 1 une fibre optique principale 10 à gradient d'indice, un premier élément optique auxiliaire 20 et un second élément optique auxiliaire 30, lesdits premier et second éléments auxiliaires 20 et 30 étant également formés de fibre à gradient d'indice, en l'occurence.

Sur les diverses figures, les axes optiques des divers éléments précités sont référencés respectivement 11, 21 et 31 pour la fibre optique principale 10, le premier élément optique 20 et le second élément optique 30.

Lorsque chacun des éléments optiques utilisés dans un coupleur conforme à la présente invention est formé d'une fibre optique, comme cela est le cas selon le mode de réalisation représenté sur la figure 1, les axes optiques 11, 21 et 31 précités correspondent aux axes de révolution desdites fibres, c'est-à-dire aux axes longitudinaux des fibres. Ces différents termes seront utilisés indifféremment dans la suite de la description.

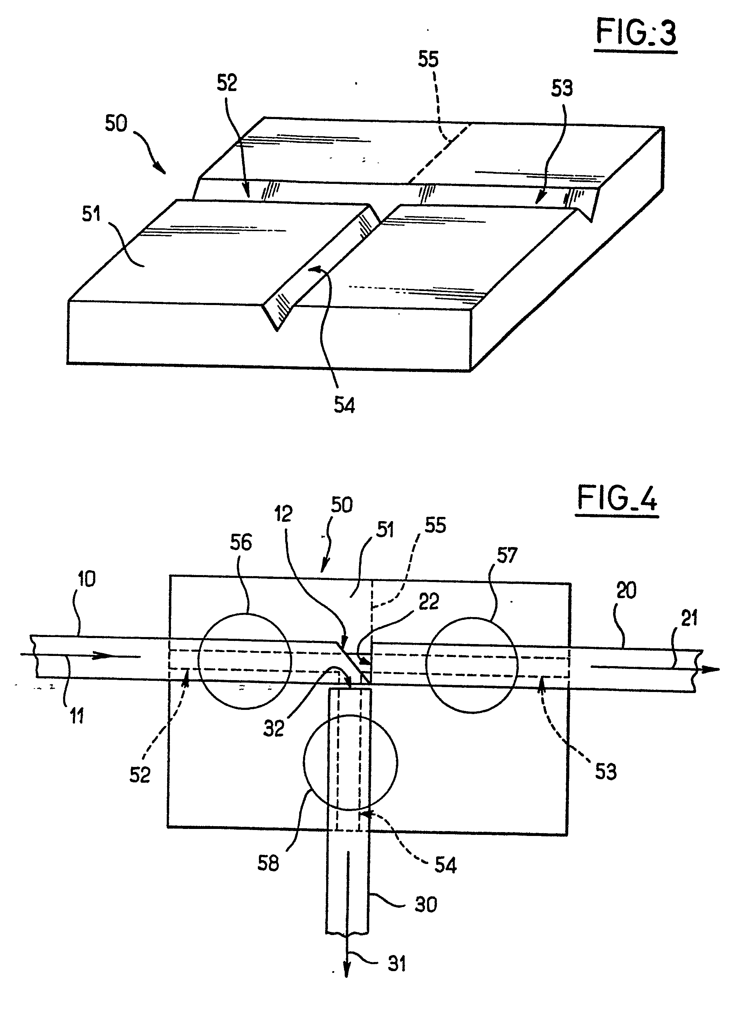

Les éléments 10, 20 et 30 sont positionnés sur un support 50 tel que représenté par exemple sur la figure 3, dont la structure sera décrite plus en détail par la suite.

Selon une caractéristique importante de la présente invention, les axes optiques 11, 21 et 31 des éléments optiques utilisés dans un coupleur conforme à la présente invention sont coplanaires.

Comme cela est représenté sur la figure 1, la fibre optique principale 10 comporte une surface frontale 12, plane et biseautée, oblique en regard de l'axe longitudinal 11, selon une inclinaison illustrée sur les figures par la référence $\alpha$.

Le premier élément optique auxiliaire 20 présente une surface frontale plane 22, perpendiculaire à l'axe optique 21, et disposée en regard de la surface frontale biseautée 12 de la fibre optique principale 10. Cependant, l'axe optique 21 du premier élément optique auxiliaire 20 est incliné sur l'axe longitudinal 11 de la fibre optique principale 10, selon un angle illustré par la référence $\psi_1$ sur les figures, en rapprochement du plan défini par la surface frontale de la fibre optique principale 10. L'axe optique 11 de la fibre optique principale 10 et l'axe optique 21 du premier élément optique auxiliaire 20 définissent un plan perpendiculaire à la surface frontale biseautée 12.

De même, le second élément auxiliaire 30 présente une surface frontale plane 32 perpendiculaire à l'axe longitudinal 31. L'axe optique 31 du second élément optique auxiliaire 30 tout en étant sensiblement transversal à l'axe longitudinal 11 de la fibre optique principale 10 et coplanaire aux axes 11 et 21, est incliné d'un angle référencé $\psi_2$ sur les figures par rapport à la normale 13 coplanaire aux axes 21 et 31 des éléments optiques auxiliaires dressée sur l'axe longitudinal 11. Là encore l'inclinaison de l'axe optique 31 sur ladite normale 13 est réalisée dans un sens tendant à rapprocher l'axe optique 31 du plan défini par la surface frontale biseautée 12 de la fibre optique principale 30.

Par ailleurs, on remarquera que les trois axes optiques 11, 21 et 31 se coupent en un point commun contenu dans le plan défini par la surface frontale biseautée 12.

Le second élément optique auxiliaire 30 est placé au voisinage de l'extrémité de la fibre optique principale 10, mais à l'opposé de la surface frontale biseautée 12.

L'homme de l'art comprendra aisément que si l'on injecte un faisceau lumineux dans la fibre optique principale 10, à l'aide de tous moyens classiques appropriés, non représentés sur les figures, en direction de la surface frontale biseautée 12, selon l'angle d'incidence du faisceau sur la surface frontale biseautée, une partie de ce faisceau traversera ladite surface frontale biseautée 12, avec réfraction, tandis que l'autre partie du faisceau incident sera réfléchie par ladite surface frontale biseautée 12 dans une direction symétrique de la direction d'incidence par rapport à la normale à cette surface, selon les lois classiques de l'optique.

La première partie du faisceau, traversant la surface frontale biseautée 12 avec réfraction, est récupérée par le premier élément optique auxiliaire.

La seconde partie du faisceau, réfléchie par la surface frontale biseautée 12, est récupérée par le second élément optique auxiliaire.

Inversement, on peut envisager d'injecter un premier faisceau dans le premier élément optique auxiliaire 20 en direction de la surface frontale 22 et d'injecter un second faisceau dans le second élément optique auxiliaire 30 en direction de la surface frontale 32.

Le premier faisceau pénétrera dans la fibre optique principale 10 en traversant la surface frontale biseautée 12 avec réfraction.

Le second faisceau sera mélangé au premier après avoir traversé l'enveloppe de la fibre optique principale 10 et avoir été réfléchi sur la surface frontale biseautée 12.

La Demanderesse a déterminé que pour obtenir un rendement maximum, l'inclinaison $\varphi_1$ de l'axe optique 21 du premier élément optique auxiliaire 20 par rapport à l'axe optique 11 de la fibre optique principale 10, devait répondre à la relation :

$$\varphi_1 = \frac{1}{2} \text{ arc sin} \left\{ n.\sin\left[\frac{\pi}{2} - \alpha - \left(\text{arc sin } \frac{N.A.}{n}\right)\right]\right\} \qquad (1)$$

dans laquelle :

n      représente l'indice au centre du coeur de la fibre optique principale 10,

N.A.      représente l'ouverture numérique de celle-ci et

α      représente l'angle de coupe de la surface frontale biseautée 12 de la fibre optique principale 10 par rapport à son axe optique 11, comme cela a été précédemment évoqué.

De même, la Demanderesse a déterminé que pour obtenir un rendement maximum, l'axe optique 31 du second élément optique auxiliaire 30 devait être incliné en regard de la normale à l'axe optique 11 de la fibre optique principale 10 d'un angle $\varphi_2$ répondant à la relation :

$$\varphi_2 = \frac{\text{arc sin}\left\{n.\sin\left[\frac{\pi}{2} - 2\alpha + \left(\text{arc sin } \frac{N.A.}{n}\right)\right]\right\}}{2} \\ - \frac{\text{arc sin}\left\{n.\sin\left[\alpha - \text{arc sin}\left(\frac{\sin 2\alpha}{n}\right)\right]\right\}}{2} \qquad (2)$$

dans laquelle, les symboles n, N.A. et α sont identiques à ceux utilisés dans la relation 1 précitée.

Sur les figures 1 et 2, l'inclinaison $\varphi_1$ et $\varphi_2$ relative des axes a été amplifiée pour clarifier l'invention.

Par ailleurs, la Demanderesse a déterminé que l'ouverture référencée $O_1$ sur la figure 2 du faisceau lumineux secondaire dirigé vers le premier élément auxiliaire 20 et dévié par réfraction lors de la traversée de la surface frontale biseautée 12 de la fibre optique principale 10 répondait à la relation :

$$O_1 = 2\alpha - \text{arc sin} \left\{ n.\sin \left[ \frac{\pi}{2} - \alpha - \left( \text{arc sin } \frac{N.A.}{n} \right) \right] \right\} \quad (3)$$

dans laquelle les symboles n, N.A. et $\alpha$ sont identiques à ceux utilisés dans les relations 1 et 2 ci-dessus, tandis que l'ouverture référencée $O_2$ sur la figure 2 du faisceau lumineux secondaire dirigé vers le second élément optique auxiliaire 30 et généré par réflexion sur la face interne de l'extrémité biseautée 12 de la fibre optique principale 10 répondait à la relation :

$$O_2 = \text{arc sin} \left\{ n.\sin \left[ \frac{\pi}{2} - 2\alpha + \left( \text{arc sin } \frac{N.A.}{n} \right) \right] \right\}$$
$$+ \text{arc sin} \left\{ n.\sin \left[ \alpha - \text{arc sin} \left( \frac{\sin 2\alpha}{n} \right) \right] \right\} \quad (4)$$

Sur la figure 2, l'ouverture $O_1$ centrée sur l'axe optique 21 est délimitée par les génératrices 23 et 24, tandis que l'ouverture $O_2$ centrée sur l'axe optique 31 est délimitée par les génératrices 33 et 34.

La valeur desdites ouvertures $O_1$, $O_2$ détermine la distance optimum relative des surfaces frontales des éléments optiques.

Enfin, la Demanderesse a déterminé que les angles limites de coupe de la surface frontale biseautée 12 de la fibre optique principale 10 par rapport à son axe optique 11 devait répondre aux relations :

$$\alpha_{max} = \frac{\pi}{2} + \text{arc sin } \frac{N.A.}{n} - \text{arc sin } \frac{1}{n} \quad (5)$$

$$\cos \left[ \alpha_{min} + \text{arc sin } \frac{N.A.}{n} \right] = \frac{\sin 2\alpha_{min}}{n} \quad (6)$$

Cela conduit dans la pratique à réaliser la surface frontale biseautée 12 de la fibre optique principale 10 selon une inclinaison par rapport à l'axe longitudinal 11 comprise entre 30 et 70°, et de préférence comprise entre 40 et 60°.

Comme cela est représenté sur la figure 3, le socle 50 utilisé dans un coupleur à fibre optique conforme à la présente invention est formé de préférence d'un bloc généralement parallélépipédique muni sur l'une de ses surfaces principales plane 51 de trois rainures référencées 52, 53 et 54 destinées à recevoir respectivement la fibre optique principale 10, le premier élément optique auxiliaire 20 et le second élément optique auxiliaire 30.

Pour cela, les rainures 52 et 53 sont sensiblement alignées, en étant inclinées entre elles toutefois d'un angle $\psi_1$.

De même, la rainure 54 est sensiblement transversale à la rainure 52 en étant inclinée toutefois d'un angle $\psi_2$ en regard de la normale à la direction longitudinale de cette dernière, parallèle à la surface principale 51.

Le support 50 est réalisé en un matériau peu sensible à des variations de dimension sous l'effet de variations de température.

Comme représenté sur la figure 3, les rainures 52, 53 et 54 présentent de préférence une section droite, perpendiculaire à la face principale 51 précitée, en forme de "V".

On remarquera par ailleurs la présence sur la surface principale plane 51 du support 50, d'une marque de référence 55 déterminant la position sur le support 50 de la surface frontale 22 du premier élément optique auxiliaire 20.

Il peut en être de même, le cas échéant, pour la surface frontale 32 du second élément optique auxiliaire 30.

La structure du support 50 précitée garantit la disposition des axes optiques 11, 21 et 31 des éléments optiques du coupleur dans un plan commun.

Par ailleurs, un positionnement correct de ces différents éléments optiques est obtenu en plaçant dans un premier temps la face frontale transversale 22 du premier élément optique auxiliaire 20 en coïncidence avec la marque de référence 55 précitée, en plaçant ensuite la fibre optique principale 10 en butée contre ladite surface frontale 22 du premier élément optique auxiliaire, et en positionnant enfin le second élément optique auxiliaire 30 en appui contre l'enveloppe extérieure de la fibre optique principale 10.

Selon une première variante de réalisation, les éléments optiques du coupleur conforme à la présente invention comprenant la fibre optique principale 10 et les éléments optiques auxiliaires 20 et 30 sont alors collés sur le boîtier 50 à l'aide de points de colle référencés respectivement 56, 57 et 58 sur la figure 4.

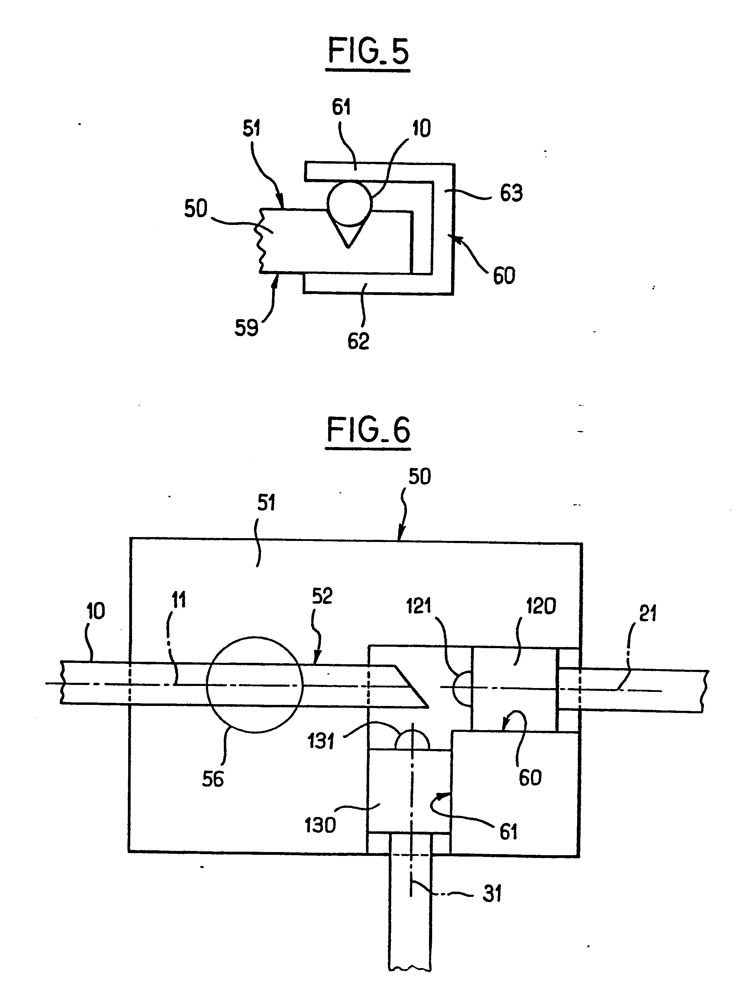

Selon une seconde variante de réalisation illustrée sur la figure 5, l'immobilisation de la fibre optique principale 10 et des fibres optiques constituant les éléments optiques auxiliaires 20 et 30 peut être réalisée à l'aide d'une pince élastique référencée 60 sur la figure 5.

Plus précisément, la pince 60 est formée de deux ailes élastiques 61, 62, généralement parallèles, reliées par une âme centrale 63 perpendiculaire à ces dernières.

L'une des ailes 62 repose contre la surface principale inférieure 59 du support 50, opposée à la surface principale 51 précitée comportant les rainures 52, 53, 54.

La seconde aile 61 repose contre la génératrice supérieure des fibres optiques précitées afin d'interdire le retrait de celles-ci hors des rainures 52, 53 et 54 associées.

Bien entendu, la pince élastique 60 est elle-même immobilisée sur le support 50 à l'aide de tout moyen classique approprié, tel que par collage.

Comme cela est illustré sur la figure 6, les éléments optiques auxiliaires peuvent également être formés d'éléments émetteurs de lumière ou d'éléments récepteurs de lumière. Sur la figure 6, ces éléments optiques auxiliaires sont référencés respectivement 120 et 130 et leurs axes optiques respectifs sont référencés 21 et 31.

Les éléments émetteurs de lumière peuvent être formés de diodes lasers ou de diodes électroluminescentes, ou de moyens fonctionnellement équivalents.

Les éléments récepteurs de lumière peuvent être formés de photodiodes, par exemple de photodiodes à avalanche ou de moyens fonctionnellement équivalents.

Bien entendu, le coupleur optique conforme à la présente invention peut combiner un élément optique auxiliaire du type émetteur et un élément optique auxiliaire du type récepteur ou encore une fibre optique et un élément récepteur de lumière ou un élément émetteur de lumière.

Dans tous les cas, l'axe optique 21 du premier élément optique auxiliaire sensiblement aligné sur l'axe optique de la fibre optique principale 10 doit être incliné selon un angle $\psi_1$ en regard de l'axe longitudinal 11 de la fibre optique principale 10.

De même, l'axe optique 31 du second élément optique auxiliaire 130 doit être incliné un angle $\psi_2$ en regard de la normale 13 coplanaire aux axes optiques 11, 21 et 31, dressée sur l'axe longitudinal 11 de la fibre optique principale 10.

On remarquera par ailleurs que les éléments optiques auxiliaires 120, 130 peuvent être ou non équipés de microlentilles. De telles microlentilles sont référencées 121 et 131 sur la figure 6, à titre d'exemple.

Là encore, les axes optiques des microlentilles qui sont coaxiaux aux axes 21 et 31 précités doivent répondre aux conditions d'inclinaison $\psi_1$ et $\psi_2$ précitées.

De façon similaire au mode de réalisation représenté sur les figures 3 et 4 comprenant trois fibres optiques 10, 20 et 30 disposées dans des rainures 52, 53 et 54 respectives ménagées dans le support 50, selon le mode de réalisation représenté sur la figure 6, la fibre optique principale 10 est disposée dans une rainure 52 ménagée dans le support, tandis que les éléments optiques auxiliaires 120 et 130 sont disposés respectivement dans des rainures complémentaires 60, 61.

La rainure 60 est ménagée sensiblement dans l'alignement de la rainure 52, tandis que la rainure 61 est ménagée sensiblement transversalement à la rainure 52.

L'usinage de la surface frontale biseautée 12 de la fibre optique principale 10 est réalisé par exemple en réunissant un grand nombre de fibres dans un manchon de maintien et en tronçonnant l'ensemble ainsi formé selon l'angle de coupe désiré.

Pour cela, on peut envisager de réaliser ledit manchon de maintien en enduisant les fibres d'une colle, telle qu'une colle époxy. Dans un tel cas, la récupération des fibres après tronçonnage peut être réalisée simplement en plongeant ledit manchon dans un solvant.

On notera également que les premier et second éléments optiques auxiliaires peuvent être constitués en variante de fibres optiques à saut d'indice.

REVENDICATIONS

1. Coupleur à fibre optique caractérisé par le fait qu'il comprend :

- un support (50) qui porte :

- une fibre optique principale (10) à gradient d'indice comportant une surface frontale biseautée (12), oblique en regard de son axe longitudinal (11),

- un premier élément optique auxiliaire (20) disposé en regard de la surface frontale biseautée (12) de la fibre optique principale (10), sensiblement dans l'alignement de cette dernière, dont l'axe optique (21) est cependant légèrement incliné sur l'axe longitudinal (11) de la fibre optique principale (10), et

- un second élément optique auxiliaire (30) adjacent à l'extrémité de la fibre optique principale (10) comportant la surface frontale biseautée, mais opposée à cette dernière, dont l'axe optique (31) est sensiblement transversal à l'axe longitudinal (11) de la fibre optique principale (10) en étant incliné sur la normale (13) à cet axe longitudinal (11).

2. Coupleur à fibre optique selon la revendication 1 caractérisé par le fait que l'un au moins des éléments optiques auxiliaires (20, 30) comprend une fibre optique.

3. Coupleur à fibre optique selon la revendication 2, caractérisé par le fait que chaque fibre optique (20, 30) formant élément optique auxiliaire présente une surface frontale (22, 32) transversale à son axe longitudinal (21, 31).

4. Coupleur à fibre optique selon la revendication 1, caractérisé par le fait que l'un au moins des éléments optiques auxiliaires comprend un émetteur ou un récepteur lumineux (120, 130).

5. Coupleur à fibre optique selon l'une des revendications 1 à 4, caractérisé par le fait que la surface frontale biseautée (12) de la fibre optique principale (10) est inclinée sur son axe longitudinal (11) d'un angle ($\alpha$) compris entre 30° et 70° en étant compris de préférence entre 40° et 60°.

6. Coupleur à fibre optique selon l'une des revendications 1 à 5, caractérisé par le fait que l'inclinaison de l'axe optique (21) du premier élément optique auxiliaire (20) par rapport à l'axe longitudinal (11) de la fibre optique principale (10) est définie par la relation :

$$\varphi_1 = \frac{1}{2} \, \text{arc sin} \left\{ n.\sin \left[ \frac{\pi}{2} - \alpha - \left( \text{arc sin} \frac{N.A.}{n} \right) \right] \right\}$$

dans laquelle :

n      représente l'indice au centre du coeur de la fibre optique principale,

N.A.   représente l'ouverture numérique de celle-ci, et

$\alpha$      représente l'inclinaison de la surface frontale biseautée de la fibre optique principale sur son axe longitudinal.

7. Coupleur à fibre optique selon l'une des revendications 1 à 6, caractérisé par le fait que l'inclinaison de l'axe optique (31) du second élément optique auxiliaire (30) par rapport à la normale à l'axe longitudinal (11) de la fibre optique principale (10) est définie par la relation :

$$\varphi_2 = \frac{\text{arc sin} \left\{ n.\sin \left[ \frac{\pi}{2} - 2\alpha + \left( \text{arc sin} \frac{N.A.}{n} \right) \right] \right\}}{2} - \frac{\text{arc sin} \left\{ n.\sin \left[ \alpha - \text{arc sin} \left( \frac{\sin 2\alpha}{n} \right) \right] \right\}}{2}$$

dans laquelle :

n        représente l'indice au centre du coeur de la fibre optique principale,

N.A.        représente l'ouverture numérique de celle-ci, et

α        représente l'inclinaison de la surface frontale biseautée de la fibre optique principale sur son axe longitudinal.

8. Coupleur à fibre optique selon l'une des revendications 1 à 7, caractérisé par le fait que le support (50) comprend un socle muni de rainures (52, 53, 54) aptes à recevoir la fibre optique principale (10) et les éléments optiques auxiliaires (20, 30).

9. Coupleur à fibre optique selon la revendication 8, caractérisé par le fait que les rainures (52, 53, 54) ménagées dans le socle (50) présentent une section droite en "V".

10. Coupleur à fibre optique selon l'une des revendications 8 ou 9, caractérisé par le fait que la fibre optique principale (10) et les éléments optiques auxiliaires (20, 30) sont collés sur le socle (50).

11. Coupleur à fibre optique selon l'une des revendications 8 ou 9, caractérisé par le fait que la fibre optique principale (10) et les éléments optiques auxiliaires (20, 30) sont immobilisés dans les rainures (52, 53, 54) du socle (50) à l'aide de pinces élastiques (60).

12. Coupleur à fibre optique selon l'une des revendications 1 à 11, caractérisé par le fait que l'inclinaison ($\varphi_1$) de l'axe optique (21) du premier élément optique auxiliaire (20) en regard de l'axe longitudinal de la fibre optique principale tend à rapprocher cet axe optique (21) de la surface frontale biseautée (12) de la fibre optique principale.

13. Coupleur à fibre optique selon l'une des revendications 1 à 12, caractérisé par le fait que l'inclinaison ($\varphi_2$) de l'axe optique (31) du second élément optique auxiliaire (30) en regard de la normale à l'axe longitudinal de la fibre optique principale tend à rapprocher cet axe optique (31) de la surface frontale biseautée (12) de la fibre optique principale.

14. Coupleur à fibre optique selon l'une des revendications 1 à 13, caractérisé par le fait que les axes optiques (11, 21, 31) de la fibre optique principale (10) et des éléments optiques auxiliaires (20, 30) se coupent en un point commun contenu dans le plan de la surface frontale biseautée (12) de la fibre optique principale.

15. Procédé d'usinage d'une surface biseautée sur une fibre optique, caractérisé par le fait qu'il comprend les étapes consistant :

- à réunir un grand nombre de fibres dans un manchon de maintien et

- à tronçonner l'ensemble ainsi formé selon l'angle de coupe désiré.

16. Procédé d'usinage selon la revendication 15, caractérisé par le fait que le manchon de maintien est réalisé en enduisant les fibres d'une colle.

17. Procédé d'usinage selon la revendication 16, caractérisé par le fait que les fibres optiques sont récupérées après tronçonnage en plongeant le manchon dans un solvant.

## FIG. 1

## FIG. 2

FIG. 3

FIG. 4

0156737

## FIG.5

## FIG.6